# EUROPÄISCHE PATENTSCHRIFT

(11) **EP 3 292 013 B1**
(45) Veröffentlichungstag und Bekanntmachung des Hinweises auf die Patenterteilung: **25.09.2019**
(21) Anmeldenummer: 16720747.1
(22) Anmeldetag: 19.04.2016
(51) Int. Cl.: B60K 15/03

(54) **VERFAHREN ZUM VERHINDERN DES VERDUNSTENS VON KRAFTSTOFF SOWIE ENTSPRECHENDER KRAFTSTOFFTANK EINES KRAFTFAHRZEUGS**
METHOD FOR PREVENTING THE EVAPORATION OF FUEL AND CORRESPONDING FUEL TANK OF A MOTOR VEHICLE
PROCÉDÉ DESTINÉ À EMPÊCHER L'ÉVAPORATION DE CARBURANT ET RÉSERVOIR À CARBURANT CORRESPONDANT D'UN VÉHICULE AUTOMOBILE

(30) Priorität: 07.05.2015 DE 102015208511
(43) Veröffentlichungstag der Anmeldung: 14.03.2018
(73) Patentinhaber: Bayerische Motoren Werke Aktiengesellschaft, 80809 München (DE)
(72) Erfinder: ARRAS, Emmanuel, 80637 München (DE); HUBER, Markus, 80995 München (DE); HOEFER, Florian, 80805 München (DE)
(86) Internationale Anmeldenummer: PCT/EP2016/058632
(87) Internationale Veröffentlichungsnummer: WO 2016/177567

(56) Entgegenhaltungen:
- DE-A1-102006 031 069
- DE-A1-102013 218 684
- JP-A- H06 286 482
- US-A- 5 056 493

## Beschreibung

Die Erfindung betrifft ein Verfahren zum Verhindern des Verdunstens von Kraftstoff in einem Kraftstofftank eines einen Verbrennungsmotor aufweisenden Kraftfahrzeugs, wobei die nicht direkt an einer Wand des Kraftstofftanks anliegende freie Oberfläche des im Tank befindlichen Kraftstoffs mit einer fluidische Eigenschaften aufweisenden Abdeckschicht aus einem Material oder chemischen Stoff bedeckt wird. Ferner betrifft die Erfindung einen Kraftstofftank eines mit einem Verbrennungsmotor ausgerüsteten Kraftfahrzeugs, in welchem das erfindungsgemäße Verfahren angewendet werden kann Zum Stand der Technik wird auf die DE 10 2006 031 069 A1 und die DE 10 2013 218 684 A1 verwiesen.

Grundsätzlich muss vermieden werden, dass Kraftstoffbestandteile, welche aufgrund unvermeidbarer Temperaturschwankungen im Kraftstofftank eines Kraftfahrzeugs, in welchem Kraftstoff für ein als Verbrennungsmotor ausgebildetes Antriebsaggregat gespeichert wird, verdunsten, in die Umgebung gelangen. Üblicherweise soll sich im Kraftstofftank auch kein nennenswerter Überdruck (gegenüber Umgebungsdruck) aufbauen, weshalb eine Be- und Entlüftung des Kraftstofftanks erforderlich ist, welche durch einen Zwischenspeicher für gasförmige Kraftstoffbestandteile (in Form eines sog. Aktivkohlefilters) geführt ist und in dem solche verdunsteten gasförmigen Kraftstoffbestandteile solange gespeichert werden, bis sie zu einem späteren Zeitpunkt dem Verbrennungsmotor zur Verbrennung zugeführt werden können. Insbesondere für Kraftfahrzeuge mit Hybridantrieb, welche neben einem Verbrennungsmotor bspw. einen aus einem Akkumulator versorgten Elektromotor als Antriebsaggregat aufweisen, haben sich übliche Aktivkohlefilter als nicht ausreichend herausgestellt, da bei solchen Kraftfahrzeugen oftmals der Verbrennungsmotor für lange Zeit nicht betrieben wird und damit kein Spülen, d.h. Regenerieren des Aktivkohlefilters möglich ist. Als Alternative werden auch Drucktanks verbaut, d.h. Kraftstofftanks, welche einem gewissen aus der Verdunstung von Kraftstoff resultierendem Überdruck standhalten können und die demzufolge nicht bzw. nicht immer belüftet werden. Jedoch sind solche Drucktanks sehr aufwändig, wenn sie im Hinblick auf eine Erfüllung der in verschiedenen Ländern derzeit gesetzlich vorgeschriebenen Testverfahren ausgelegt werden.

Im druckschriftlichen Stand der Technik vorgeschlagen wurden bereits weitere Maßnahmen, mit Hilfe derer die Verdunstung von Kraftstoff in einem Kraftfahrzeug-Kraftstofftank verhindert werden kann. Insbesondere ist die Abdeckung der freien Oberfläche des sich im Kraftstofftank befindenden Kraftstoffvolumens eine solche Maßnahme, wobei für eine solche Abdeckung entweder eine Schicht von schwimmenden Partikeln verwendet werden kann (vgl. die eingangs erstgenannte Schrift) oder eine Gel-Schaum-Flammenhemmer-Schicht (vgl. die eingangs zweitgenannte Schrift) vorgeschlagen wurde. Für eine gute Erfüllung der dieser im weiteren sog. Abdeckschicht zugeordneten Funktion, nämlich eine Verdunstung von Kraftstoffbestandteilen zu verhindern, ist es vorteilhaft, wenn diese Schicht quasi fluidische Eigenschaften aufweist, d.h. einer langsamen Scherung praktisch keinen Widerstand entgegensetzt und somit eine endliche, aber nicht zu hohe Viskosität besitzt. Damit kann aufgrund ihrer "quasi-fluidischen Eigenschaften" diese Abdeckschicht zumindest näherungsweise auch den üblichen Schwapp- oder Schwallbewegungen des Kraftstoffs in einem Kfz-Kraftstofftank folgen und somit die Oberfläche auch eines im üblichen Umfang bewegten Kraftstoffspiegels im Tank zumindest annähernd abdecken, wenngleich dies vollumfänglich nicht unbedingt erforderlich ist. Lediglich dann, wenn das Fahrzeug für einen über eine oder mehrere Minuten hinausgehenden Zeitraum abgestellt wird, sollte der Kraftstoffspiegel im Tank vollständig abgedeckt sein, um Verdunstungsprozesse so weit als möglich zu vermeiden.

Nach vorstehender Erläuterung besitzen diejenigen Partikel, die in der genannten DE 10 2006 031 069 A1 beschrieben sind, zwar eine fluidische Eigenschaft, weisen jedoch für sich betrachtet eine nennenswerte Größe auf und können daher keine ausreichend dichte Abdeckschicht bilden, welche eine Verdunstung von Kraftstoffbestandteilen sicher verhindert. Vielmehr kann in einem mit solchen Partikeln versehenen Kraftstofftank durch enge Zwischenräume solcher Partikel hindurch weiterhin Kraftstoff verdunsten, insbesondere weil eine Benetzung der nicht in den Kraftstoff eintauchenden Oberflächenabschnitte der einzelnen Partikel durch/mit Kraftstoff kaum zu verhindern ist und von den dann oberhalb des Kraftstoffspiegels liegenden benetzten Oberflächen ausgehend eine Verdunstung erfolgt. Demgegenüber günstiger ist der eingangs zweitgenannte Vorschlag einer Gel-Schaum-Flammenhemmer-Schicht, da eine solche eine ausreichend dichte Abdeckschicht bilden kann, durch welche hindurch wie gewünschte keine Verdunstung von Kraftstoffbestandteilen erfolgen kann. Allerdings sollten dann, wie in der genannten DE 10 2006 031 069 A1 beschrieben, Maßnahmen ergriffen werden, mit Hilfe derer weitestgehend verhindert wird, dass Teile dieser Gel-Schaum-Flammenhemmer-Schicht insbesondere dann, wenn sich nur noch sehr wenig Kraftstoff im Tank befindet und diese Schicht somit nahe der Ansaugöffnung einer den Kraftstoff aus dem Tank zum Verbrennungsmotor fördernden Pumpe liegt, von dieser Kraftstoff-Pumpe angesaugt werden.

Aus verschiedenen Gründen kann eine solche Abdeckschicht nach längerer Zeit teilweise abgebaut werden und damit ab einem gewissen Zeitpunkt ihre Funktion nicht mehr ausreichend erfüllen. Dies sollte möglichst selbsttätig erkannt werden, weshalb es Aufgabe der vorliegenden Erfindung ist, für ein Verfahren nach dem Oberbegriff des unabhängigen Anspruchs aufzuzeigen, wie eine Funktionseinschränkung der Abdeckschicht automatisch erkannt werden kann.

Die Lösung dieser Aufgabe ergibt sich mit den Merkmalen des Anspruchs 1 und ist für ein Verfahren nach dem Oberbegriff des Anspruchs 1 dadurch gekennzeichnet, dass vorzugsweise gelegentlich in Form einer eigenständigen Überprüfungsprozedur mittels eines Drucksensors im zeitlich zumindest während dieser Überprüfungsprozedur gegenüber der Umgebung abgesperrtem Kraftstofftank überwacht wird, ob sich in diesem nach einer gewissen Zeitspanne dann ein nennenswerter Überdruck (gegenüber Umgebungsdruck) einstellt. Bejahendenfalls ist zu folgern, dass die Abdeckschicht nicht mehr ausreichend dicht ist und als Folge dessen jedenfalls bei Vorliegen größerer Temperatur-Schwankungen eine KraftstoffVerdunstung stattfindet, welche zu einer Druckerhöhung im (gegenüber der Umgebung abgesperrten) Kraftstofftank führt. Dann kann eine diese Überprüfungsprozedur selbsttätig durchführende elektronische Steuereinheit dem bzw. einem Nutzer des Kraftfahrzeugs anzeigen, dass neues Material oder neuer chemischer Stoff für die Abdeckschicht in den Kraftstofftank einzubringen ist (weil das im Tank vorhandene Material nicht mehr ausreichend ist). Dabei kann der Kraftstofftank speziell für die Durchführung dieser Überprüfungsprozedur mittels eines von der besagten elektronischen Steuereinheit geeignet betätigten Ventils gegenüber der Umgebung abgesperrt werden, es ist jedoch auch möglich, dass ein erfindungsgemäß ausgeführter Kraftstofftank bspw. über eine Rückschlagventilvorrichtung lediglich belüftbar ist um einen nennenswerten Unterdruck bei Kraftstoffentnahme zu vermeiden (wofür Umgebungsluft in den Kraftstofftank hinein gelangen kann), jedoch regelmäßig nicht in die Umgebung entlüftbar ist (d.h. dass kein Gas aus dem Kraftstofftank in die Umgebung entweichen kann), weil letzteres wegen der erfindungsgemäßen Ausgestaltung mit der Abdeckschicht überhaupt nicht mehr erforderlich ist. (Unabhängig davon kann selbstverständlich für den Notfall ein Sicherheitsventil vorgesehen sein, welches bei aufgrund besonderer Umstände extrem ansteigendem Druck im Kraftstofftank eine Entlüftung desselben bspw. über ein Aktivkohlefilter in die Umgebung zulässt, jedoch üblicherweise geschlossen ist). Falls üblicherweise keine Belüftung in die Umgebung vorgesehen ist, so kann die erfindungsgemäße Überprüfung der Funktionsfähigkeit der Absperrschicht über eine Messung des im Kraftstofftank herrschenden Drucks auch praktisch kontinuierlich durchgeführt werden, da ja dann keine separate Überprozedur durchgeführt werden muss, im Rahmen derer der Kraftstofftank zunächst gegenüber der Umgebung abgesperrt wird.

Was die vorstehend genannte gewisse Zeitspanne betrifft, während derer im Falle, dass die besagte Überprüfung oder Überwachung hinsichtlich Überdruck im Tank nicht kontinuierlich durchgeführt wird, der Druck bzw. ein eventueller Überdruck im Tank registriert bzw. überwacht wird, so sollte diese Zeitspanne so lange sein, dass im Falle einer nicht vollumfänglich wirksamen Abdeckschicht durch Verdunstungsprozesse auch tatsächlich ein messbarer Überdruck im Kraftstofftank entstehen kann. Die Länge dieser Zeitspanne ist daher unter anderem davon abhängig, ob Kraftstoff aus dem Tank entnommen wird, wobei vorzugsweise in einem solchen Fall überhaupt keine Überwachung durchgeführt wird, da eine Entnahme von Kraftstoff selbstverständlich das Ergebnis signifikant verfälschen würde. Da der Umfang einer Kraftstoffverdunstung bei nicht vollständig intakter Abdeckschicht selbstverständlich auch von der im Kraftstofftank und/oder in dessen Umgebung herrschenden Temperatur abhängig ist, hat diese oder eine Ersatzgröße bspw. in Form der Umgebungstemperatur ebenfalls einen nennenswerten Einfluss auf die besagte gewisse Zeitspanne. Bei üblichen Umgebungstemperaturen (von 20°C) kann die gewisse Zeitspanne durchaus in der Größenordnung von mehreren Stunden liegen, wobei sich der Kraftstofftank eines betriebswarm oder heiß abgestellten Fahrzeugs direkt anschließend an das Abstellen jedenfalls bei Umgebungstemperaturen in der Größenordnung von 20°C oder mehr relativ kurzfristig soweit erwärmt, dass im gegenüber der Umgebung abgesperrten Zustand ein messbarer Überdruck von nennenswerter Höhe im Kraftstofftank entstehen wird. Dann kann die besagte Zeitspanne bspw. nur 15 Minuten betragen. Hilfreich kann es in diesem Zusammenhang auch sein, gleichzeitig die Temperaturentwicklung (hierfür kann ein Temperatursensor vorgesehen sein) und die Druckentwicklung im Kraftstofftank zu betrachten. Solange bei steigender Temperatur keine oder keine nennenswerte Erhöhung des Drucks im Kraftstofftank feststellbar ist, so ist die Abdeckschicht vollständig wirksam und daher funktionsfähig. Steigt jedoch mit steigender Temperatur im gegenüber der Umgebung abgesperrten Kraftstofftank auch der Druck im Kraftstofftank nennenswert an, so kann davon ausgegangen werden, dass die Abdeckschicht nicht mehr in der Lage ist, die ihr eigentlich zugewiesene Aufgabe zu erfüllen. Eine elektronische Steuereinheit, welche die besagte Überwachungsprozedur durchführt, kann dann eine geeignete Mitteilung an den Nutzer des Fahrzeugs senden.

Weiterhin wird vorliegend ein günstiges Material oder ein günstiger chemischer Stoff aufgezeigt, welches bzw. welcher eine zur Verhinderung des Verdunstens von Kraftstoffbestandteilen im Kraftstofftank eines Kraftfahrzeuges dienende und hierfür auf der Oberfläche des im Kraftstofftank befindlichen Kraftstoffvolumens schwimmende Abdeckschicht bilden kann. Dies ist sowohl in Form eines Verfahrensanspruchs formuliert als auch in Form eines auf einen Kraftstofftank bezogenen Vorrichtungsanspruchs, in welchem ein erfindungsgemäßes Verfahren zum Verhindern des Verdunstens von Kraftstoff praktiziert wird.
Demnach kann das die Abdeckschicht bildende Material oder der chemische Stoff folgende Eigenschaften (1) - (4) aufweisen:
(1): Das Material oder der Stoff ist mit den üblichen Kraftstoffen für Kraftfahrzeug-Verbrennungsmotoren praktisch nicht mischbar;
(2): die Dichte des Materials oder Stoffes ist kleiner 750 Gramm / Liter (bei 20 °C);
(3): der Siedepunkt des Materials oder Stoffes liegt oberhalb von 80° Celsius;
(4): das Material oder der Stoff ist umweltverträglich brennbar.

Das unter (1) angeführte Merkmal verhindert, dass sich Moleküle des im Kraftstofftank befindlichen Kraftstoff-Volumens mit der Abdeckschicht vermischen, wodurch sie nämlich in direkten Kontakt mit dem oberhalb des Kraftstoffspiegels im Kraftstofftank Luftvolumen kämen, wo bei entsprechenden Temperaturen unter Berücksichtigung des Dampfdruckgleichgewichts eine (unerwünschte) Verdunstung erfolgen würde. Weiterhin wird mit diesem Merkmal verhindert, dass Teile des die Abdeckschicht bildenden Materials oder Stoffes in den Kraftstoff gelangen und als Folge dessen in nennenswertem Umfang zum Verbrennungsmotor gefördert würden. Zur Erzielung dieser Eigenschaft wird vorzugsweise ein Material oder ein chemischer Stoff gewählt, in welchem die atomare oder molekulare Bindung zwischen dessen kleinsten Teilchen größer als diejenige im Kraftstoff ist. Beispielsweise ist diese Eigenschaft bei Vorliegen einer reinen polaren Atombindung gegeben. Bekanntlich (sowie laut Wikipedia) sind polare Atombindungen solche chemische Bindungen, bei denen die beteiligten Atome infolge ihrer unterschiedlichen Elektronegativität Teilladungen tragen, wobei jedoch die Ladungs-Differenz für ein Entstehen einer reine lonenbindung nicht groß genug ist.
Da die atomare Bindung zwischen den einzelnen Molekülen im Kraftstoff relativ schwach ist (nämlich in Form der Van-der-Waals-Kräfte vorliegt), ist es ausreichend, wenn der für die erfindungsgemäße Abdeckschicht verwendete (und als Grenzschicht gegen Verdunstung dienende) chemische Stoff eine demgegenüber stärkere atomare Bindung zeigt, um eine Vermischung mit dem Kraftstoff zu verhindern. Eine bevorzugte Möglichkeit hierfür stellt die Wasserstoffbrückenbindung dar, in der das chemische Element "H" polar gebunden ist und die vorzugsweise über O-H, N-H, oder F-H "Gruppen" (mit O = Sauerstoff, N = Stickstoff, F = Fluor) erfolgt.

Mit dem unter (2) aufgeführten Merkmal ist sichergestellt, dass das die Abdeckschicht bildende Material oder der die Abdeckschicht bildende chemische Stoff auf dem Kraftstoffspiegel, d.h. auf der Oberfläche des sich im Kraftstofftank befindenden Kraftstoffvolumens schwimmt (und dabei nicht untergeht, d.h. in das Kraftstoffvolumen hinein absinkt). Damit kann die Abdeckschicht wie erwünscht als eine Sperrschicht zwischen dem im Tank befindlichen Kraftstoff und dem sich oberhalb des Kraftstoffspiegels und genauer oberhalb der auf diesem schwimmenden Abdeckschicht befindenden Luftvolumens im Kraftstofftank wirken.

Mit dem unter (3) aufgeführten Merkmal ist sichergestellt, dass das die Abdeckschicht bildende Material oder der die Abdeckschicht bildende chemische Stoff beim vorgesehenen Einsatzzweck und den dabei auftretenden ungünstigsten Randbedingungen nicht seinerseits verdunstet, da letzteres eine Erfüllung der bestimmungsgemäßen Funktion der Abdeckschicht unmöglich machen würde.

Schließlich ist das unter (4) aufgeführte Merkmal vorgeschlagen, damit geringe Teilmengen des die Abdeckschicht bildenden Materials oder chemischen Stoffes, die unter widrigen Umständen möglicherweise insbesondere dann, wenn sich nur noch sehr wenig Kraftstoff im Kraftstofftank befindet, von einer weiter oben genannten Kraftstoff-Pumpe zusammen mit Kraftstoff angesaugt und zum Verbrennungsmotor gefördert würden, in diesem auch verbrannt werden können. Damit würden nur noch gasförmige Bestandteile dieses Materials oder chemischen Stoffe - letztere in oxidierter Form - in die Umgebung gelangen, ohne dabei eine Gefahr für die Umwelt darzustellen.

Beispielsweise oder bevorzugt kann das die Abdeckschicht bildende Material oder der besagte die Abdeckschicht bildende chemische Stoff ein aus Nanopartikeln zusammengesetztes Quasi-Fluid sein. Nanopartikel bzw. Nanoteilchen bezeichnen bekanntlich (auch nach Wikipedia) Verbünde von einigen wenigen bis einigen tausend Atomen oder Molekülen, wobei sich der Begriff "Nano" auf ihre Größe bezieht, die typischerweise bei 1 bis 100 Nanometern liegt. Partikel dieser Größe liegen in einer erfindungsgemäßen Abdeckschicht derart eng aneinander an, dass kein Zwischenraum oder Durchgang für die Verdunstung auch nur geringer Kraftstoffbestandteile in dieser Abdeckschicht verbleibt. Dabei können solche Nanopartikel durch Fullerene gebildet sein, die mit geeigneten Chemikalien hinsichtlich verringerter Viskosität und/oder atomaren oder molekularen Bindungseigenschaften auf ihre erfindungsgemäße Funktion hin ausgelegt sind. sind. In der Materialwissenschaft sind solche Behandlungsverfahren unter dem Begriff "Surface Modification" bekannt und hier wird nun vorgeschlagen, ein geeignetes Material, bspw. Fullerene (= sphärische Moleküle aus Kohlenstoffatomen mit hoher Symmetrie, welche weitere Modifikationen des chemischen Elements Kohlenstoff (neben Diamant, Graphit, Lonsdaleit, Chaoit, Kohlenstoffnanoröhren, und Graphen) darstellen - Definition aus Wikipedia) derart zu modifizieren, dass sie eine erfindungsgemäße Abdeckschicht in einem Kfz.-Kraftfahrzeugtank mit den gewünschten Eigenschaften gemäß Patentanspruch 2 und/oder einer gewünschten Viskosität bilden können.

## Patentansprüche

1. Verfahren zum Verhindern des Verdunstens von Kraftstoff in einem Kraftstofftank eines einen Verbrennungsmotor aufweisenden Kraftfahrzeugs, wobei die nicht direkt an einer Wand des Kraftstofftanks anliegende freie Oberfläche des im Tank befindlichen Kraftstoffs mit einer fluidische Eigenschaften aufweisenden Abdeckschicht aus einem Material oder chemischen Stoff bedeckt wird,
**dadurch gekennzeichnet, dass** mittels eines Drucksensors im Kraftstofftank überwacht wird, ob sich in diesem im gegenüber der Umgebung abgesperrten Zustand ein Überdruck gegenüber Umgebungsdruck einstellt und bejahendenfalls einem Nutzer des Kraftfahrzeugs angezeigt wird, dass neues Material oder neuer chemischer Stoff für die Abdeckschicht in den Kraftstofftank einzubringen ist.

2. Kraftstofftank eines mit einem Verbrennungsmotor ausgerüsteten Kraftfahrzeugs, in welchem das Verfahren nach Anspruch 1 angewendet wird und wobei für das die Abdeckschicht bildende Material oder chemischen Stoff ein Material oder Stoff mit den folgenden Eigenschaften verwendet wird:
• das Material oder der Stoff ist mit den üblichen Kraftstoffen für Kraftfahrzeug-Verbrennungsmotoren nicht mischbar
• die Dichte des Materials oder Stoffes ist kleiner 750 Gramm / Liter (bei 20°C)
• der Siedepunkt des Materials oder Stoffes liegt oberhalb von 80° Celsius
• das Material oder der Stoff ist umweltverträglich brennbar.

3. Kraftstofftank nach Anspruch 2, wobei das Material oder der chemische Stoff polare Atombindungen aufweist.

4. Kraftstofftank nach Anspruch 2, wobei das die Abdeckschicht bildende das Material oder der besagte chemische Stoff aus Nanopartikeln zusammengesetzt ist.

5. Kraftstofftank nach Anspruch 4, wobei die Nanopartikel durch Fullerene gebildet sind, die mit geeigneten Chemikalien hinsichtlich verringerter Viskosität und/oder atomaren oder molekularen Bindungseigenschaften auf ihre erfindungsgemäße Funktion ausgelegt sind.

## Claims

1. A method for preventing the evaporation of fuel in a fuel tank of a motor vehicle comprising an internal combustion engine, wherein the free surface of the fuel in the tank that is not directly in contact with a wall of the fuel tank is covered by a cover layer having fluidic properties and formed of a material or chemical substance, **characterised in that** a pressure sensor in the fuel tank monitors whether, in this state blocked off from the surrounding environment, there is an overpressure in relation to the ambient pressure, and, if so, a user of the motor vehicle is notified that new material or new chemical substance for the cover layer must be introduced into the fuel tank.

2. A fuel tank of a motor vehicle equipped with an internal combustion engine, in which the method according to claim 1 is applied and wherein a material or substance having the following properties is used for the material or chemical substance forming the cover layer:
• the material or the substance is not miscible with the conventional fuels for motor vehicle internal combustion engines
• the density of the material or substance is less than 750 grams/litre (at 20°C)
• the boiling point of the material or substance is above 80° Celsius
• the material or the substance is combustible in an environmentally friendly way.

3. A fuel tank according to claim 2, wherein the material or the chemical substance has polar atom bonds.

4. A fuel tank according to claim 2, wherein the material or said chemical substance forming the cover layer is composed of nanoparticles.

5. A fuel tank according to claim 4, wherein the nanoparticles are formed by fullerenes which, by means of suitable chemicals, are designed for their function according to the invention in respect of reduced viscosity and/or atomic or molecular bonding properties.

## Revendications

1. Procédé pour éviter l'évaporation du carburant dans un réservoir de véhicule automobile équipé d'un moteur à combustion interne selon lequel,
la surface supérieure libre du carburant contenu dans le réservoir et qui n'est pas en contact direct avec une paroi du réservoir est couverte d'une couche de couverture présentant des caractéristiques fluidiques en une matière ou en un produit chimique,
procédé caractérisé en qu'à l'aide d'un capteur de pression dans le réservoir de carburant, on surveille s'il s'y établit une surpression vis-à-vis de la pression ambiante dans cet état coupé de la pression ambiante et dans l'affirmative, on indique à l'utilisateur du véhicule qu'il faut introduire de nouveau de la matière ou du produit chimique de la couche de couverture dans le réservoir de carburant.

2. Réservoir de carburant d'un véhicule automobile équipé d'un moteur à combustion interne appliquant le procédé de la revendication 1, et selon lequel pour la matière ou le produit chimique formant la couche de couverture on utilise une matière ou un produit ayant les propriétés suivantes :
- la matière ou le produit n'est pas miscible avec les carburants habituels alimentant des moteurs à combustion interne de véhicules automobiles,
- la densité la matière ou du produit est inférieure 750 g/litre (à 20°C),
- le point d'ébullition la matière ou du produit est supérieure 80°Celsius,
- la matière ou le produit est combustible de manière écologique.

3. Réservoir de carburant selon la revendication 2,
dans lequel la matière ou le produit chimique présente des composés atomiques polaires.

4. Réservoir de carburant selon la revendication 2,
dans lequel la matière ou le produit chimique formant la couche de couverture se compose de nanoparticules.

5. Réservoir de carburant selon la revendication 4,
dans lequel les nanoparticules sont constitués par des fullerènes qui sont conçus pour obtenir leurs fonctions selon l'invention avec des produits chimiques appropriés conservant la viscosité réduite et/ou des propriétés de liaisons atomiques ou moléculaires.
